# EUROPÄISCHE PATENTSCHRIFT

(11) **EP 1 114 795 B1**
(45) Veröffentlichungstag und Bekanntmachung des Hinweises auf die Patenterteilung: **02.05.2003**
(21) Anmeldenummer: 00127399.4
(22) Anmeldetag: 14.12.2000
(51) Int. Cl.: C01G 55/00, C22B 11/06

(54) **Verfahren zur Abtrennung von Ruthenium aus Edelmetall-Lösungen**
Process for the separation of ruthenium from precious metal solutions
Procédé pour la séparation de ruthenium a partir de solutions de metaux precieux

(30) Priorität: 05.01.2000 DE 10000275
(43) Veröffentlichungstag der Anmeldung: 11.07.2001
(73) Patentinhaber: W. C. Heraeus GmbH & Co. KG, 63450 Hanau (DE)
(72) Erfinder: Schäfer, Dieter, 35516 Münzenberg (DE); Meyer, Horst, Dr., 63674 Altenstadt (DE); Grehl, Matthias, Dr., 60388 Frankfurt (DE)
(74) Vertreter: Kühn, Hans-Christian

(56) Entgegenhaltungen:
- US-A- 4 390 366
- GMELIN: "gmelins handbuch der anorganischen chemie,ruthenium" 1938 , VERLAG CHEMIE , BERLIN XP002166005 63 * Seite 27 - Seite 28 *

## Beschreibung

Die Erfindung betrifft ein Verfahren zur Abtrennung von Ruthenium aus Edelmetall-Lösungen.

In US 4,390,366 wird ein Verfahren offenbart zur Abtrennung von Ruthenium aus Edelmetall-Lösungen. durch Erwärmen der rutheniumhaltigen Edelmetall-Lösung, die H⁺ und Cl⁻-Ionen enthält und anschließende Zugabe von Chlorat sowie weiterem Erwärmen der entstehenden Suspension/Lösung auf 80 bis 90 °C und Auffangen des entstehenden Rutheniumtetroxids.

Die Abtrennung des Edelmetalls Ruthenium aus Edelmetall-Lösungen kann durch Oxidation von Alkaliruthenat in wässrigen Lösungen (siehe DE 39 35 798 A1) erfolgen, bei dem die Oxidation mit Ozon bei pH-Werten oberhalb von 8 durchgeführt wird. Alternativ kann die vorhandene rutheniumhaltige Edelmetall-Lösung mittels Natriumchlorat und/oder Chlorgas destilliert werden.

Nachteilig bei diesen Verfahren ist die Tatsache, dass für eine vollständige Abtrennung von Ruthenium teilweise je nach Zusammensetzung der Edelmetall-Lösung ein sehr hoher Zeit- und Energieaufwand notwendig.

Aus dem Vorgenannten ergibt sich das Problem, mit Hilfe eines neuartigen Verfahrens die oben genannten Nachteile zumindest teilweise zu beseitigen. Das sich ergebende Problem liegt insbesondere darin, ein Verfahren bereitzustellen, bei dem eine vollständige Abtrennung von Ruthenium aus einer Edelmetall-Lösung in möglichst kurzer Zeit und somit kostengünstig verwirklicht werden kann

Dieses Problem wird erfindungsgemäß durch ein Verfahren nach Anspruch 1 gelöst.

Beim erfindungsgemäßen Verfahren wird in einer ersten Verfahrensstufe eine rutheniumhaltige Edelmetall-Lösung auf eine Temperatur von T = 50 °C bis T 65 °C erwärmt, wobei deren H⁺-Konzentration und Cl⁻-Konzentration jeweils > 1 mol/l ist.

Die Chloridionen dienen zur Zerstörung des unter Umständen entstehenden Chlordioxides, das ausgesprochen stark zur Selbstdetonation neigt.

Anschließend wird in einer zweiten Verfahrensstufe Chlorat zur im Schritt a) konditionierten Lösung zugegeben, wobei die entstehende Suspension/Lösung wiederum eine Temperatur von T = 50 °C bis T = 65 °C aufweist. In der Regel während der Zugabe oder aber auch nach der Zugabe von Chlorat wird ein Trägergas, beispielsweise Luft, durch die Suspension/Lösung geleitet und das entstandene Rutheniumtetroxid, beispielsweise in einer Absorptionslösung, insbesondere HCI-Lösung, aufgefangen, wobei nach der Zugabe des Chlorates die Suspension/Lösung auf eine Temperatur von T = 80 °C bis T = 90 °C erwärmt wird.

Das Trägergas dient zur starken Verdünnung des entstehenden Rutheniumtetroxides, das in höherer Konzentration zur Detonation neigt.

Schließlich wird in einer dritten Verfahrensstufe Bromat zur entstandenen Suspension/Lösung bei einem pH-Wert von 1 bis 3 zugegeben, wobei die entstehende Suspension/Lösung eine Temperatur von T = 60 °C bis T = 95 °C aufweist. Gleichzeitig oder danach wird ein Trägergas durch die Suspension/Lösung geleitet und das entstehende Rutheniumtetroxid, beispielsweise in einer Absorptionslösung, insbesondere HCI-Lösung, aufgefangen.

Der pH-Wert-Bereich von 1 bis 3 ist für diesen letzten Verfahrensschritt wichtig, da sich in diesem Bereich das Ruthenium besonders leicht zu Rutheniumtetroxid oxidieren lässt.

Zunächst ist es vorteilhaft, da bewährt, wenn das Rutheniumtetroxid in einer Absorptionslösung aufgefangen wird, beispielsweise in einer HCI-Lösung.

Wenn bei der Zugabe von Chlorat eine äquimolare Menge Chlorat zur Lösung gegeben wird, ist dies vorteilhaft, da zumindest somit die Mindestmenge für eine nahezu vollständige Umsetzung gegeben ist.

Weiterhin ist es vorteilhaft, dass als Absorptionslösung Salzsäure verwendet wird, da aus dieser Lösung relativ einfach festes Rutheniumchlorid und Ruthenium-Metall erzeugt werden können. In vorteilhafter Art und Weise hat sich Chlorat in Form einer Natriumchloratlösung für die Zugabe zur entsprechenden Lösung bewährt.

Insbesondere ist es von Vorteil, wenn eine 4,5 molare Natriumchloratlösung eingesetzt wird, da bei der Zugabe von Chlorat als Oxidationsmittel durch diese hochkonzentrierte Lösung die Volumenzunahme der Reaktionslösung relativ gering ist.

Ferner ist es von Vorteil, dass Bromat in Form einer Natriumbromatlösung zur Lösung gegeben wird, insbesondere wenn diese Natriumbromatlösung 1,5 bis 2 molar ist, da die Volumenzunahme der Reaktionslösung gering bleibt.

In besonderem Maße hat es sich in der Praxis als besonders vorteilhaft herausgestellt, wenn die Lösung vor der Bromatzugabe (also in der ersten Verfahrensstufe) auf eine Temperatur von T = 65 °C erwärmt wird, da die Oxidation des Rutheniums zu Rutheniumtetroxid besonders rasch, die Selbstzersetzung des Oxidationsmittels jedoch noch relativ langsam erfolgt.

Weiterhin ist es von Vorteil, wenn die Lösung vor der Zugabe von Chlorat (also in der ersten Verfahrensstufe) frei von organischen Verbindungen ist, da es somit nicht zu unkontrollierten Oxidationsreaktionen und unter Umständen somit zu einer Explosion kommen kann.

In diesem Zusammenhang ist es weiterhin vorteilhaft, wenn die Zugabegeschwindigkeit der Chloratlösung dem Reaktionsfortschritt angepasst wird, um Chloratüberschüsse und auf diese Art und Weise eine zu heftige Reaktion zu verhindern.

Es ist vorteilhaft, wenn nach der Bromatzugabe und dem Abreagieren eine H⁺-Konzentration von c > 1 mol/l eingestellt wird, um somit unter Umständen gebildete Metallhydroxide aufzulösen, die ansonsten die weitere Verarbeitung der nunmehr rutheniumfreien Lösung erschweren würden.

In vorteilhafter Art und Weise wird nach der Einstellung in die Lösung Chlorgas eingeleitet, um Bromid und Brom aus der nunmehr rutheniumfreien Lösung zu entfernen. Hierbei kann gegebenenfalls vorher nochmals mit HCI stark angesäuert werden.

Schließlich ist es von Vorteil, dass bei der Einleitung von Chlor gleichzeitig Pressluft verwendet wird, da dies eine mechanische Unterstützung und somit eine innigere Begasung der Lösung mit Chlor bewerkstelligt wird und gleichzeitig entstehendes Brom aus der Lösung ausgetrieben wird.

Das nachfolgende Beispiel dient zur Erläuterung der Erfindung:

### Laboranlage

Die Destillationsanlage bestand aus einem 1 I Vierhalskolben, mit Thermometer, Gaseinleitrohr, Tropftrichter und Gasabgang. Der Gasabgang führte zu 3 Gaswaschflaschen. Die ersten beiden Waschflaschen waren jeweils mit ca. 150 ml HCI konz. befüllt und die dritte Waschflasche war mit ca. 150 ml Wasser befüllt. An die letzte Gaswaschflasche war eine Vakuumpumpe angeschlossen, über die während der Destillation ca. 100 l Luft/h durch Destillationsanlage gesaugt wurden. Der Vierhalskolben wurde mit einer Pilzheizhaube beheizt und die Lösung über einen unter der Heizhaube sitzenden Magnetrührer gerührt.

### Versuchsdurchführung

### Einsatz: 300 ml Edelmetall-Lösung, rutheniumhaltig - c(H⁺) = 5,4 mol/l

300 ml rutheniumhaltige Lösung wurde in der Destillationsanlage vorgelegt und aufgeheizt. Im Temperaturbereich von 70 °C bis 76 °C wurden innerhalb von 1,5 Stunden 120 ml 4,5 molare Natriumchloratlösung zudosiert. Der pH-Wert betrug danach 1,63 bei T= 76 °C.

Anschließend wurde auf ca. 85 °C aufgeheizt, Waschflasche 1 mit frischer HCI befüllt und 25 ml 1,25 molare Natriumbromatlösung zugegeben. Nach 2,5 Stunden wurde ein pH-Wert von 2,66 bei T= 84 °C gemessen.

Bei 85 °C bis 90 °C wurden nun jeweils ca. 2 bis 3 ml HCI konzentriert und ca. 4 bis 6 ml Natriumbromatlösung zudosiert.Dieser Vorgang wurde solange wiederholt, bis sich die erste Waschflasche, die regelmäßig mit frischer HCI konzentriert befüllt wurde, nur noch schwach färbte. Es wurden dazu insgesamt 64 ml HCI konzentriert und 1,25 molare Natriumbromatlösung innerhalb von 10 Stunden verbraucht.

### Danach wurde die Lösung abgekühlt

Zur Zerstörung von überschüssigem Natriumchlorat und Natriumbromat wurden 150 ml HCI konz. zum Filtrat zugegeben und die Lösung von ca. 850 ml auf 630 ml eingeengt.

Von dieser Lösung wurde eine Probe per DCP analysiert.

### Auswertung

| Analysenergebnisse | | | Bilanzierung | | |
|---|---|---|---|---|---|
| Probe | Ausgang | Nach Destillation | Probe | Ausgang | Nach Destillation |
| Volumen | 0,3 l | 0,63 l | | Einsatz absolut | Menge bez. Einsatz |
| Ru | 10,07 g/l | 0,006 g/l | Ru | 3,02 g | 0,13 % |
| Ir | 0,30 g/l | 0,145 g/l | Ir | 0,09 g | ∼ 100 % |

Durch das Verfahren konnten 99,97 % des Rutheniums vom Iridium abgetrennt werden.

## Patentansprüche

1. Verfahren zur Abtrennung von Ruthenium aus Edelmetall-Lösungen, durch Erwärmen der rutheniumhaltigen Edelmetall-Lösung, die H⁺ und Cl⁻-lonen enthält, und anschließende Zugabe von Chlorat sowie weiterem Erwärmen der entstehenden Suspension/Lösung auf 80 bis 90 °C und Auffangen des entstehenden Rutheniumtetroxids, **dadurch gekennzeichnet, dass** in einer ersten Stufe die eine H⁺-Konzentration und Cl⁻ -Konzentration von jeweils > 1 mol/l aufweisende, rutheniumhaltige Edelmetall-Lösung auf 50 bis 65 °C erwärmt wird, dann in einer zweiten Stufe das Chlorat zugegeben und die entstehende, eine Temperatur von 50 bis 65 °C aufweisende Suspension/Lösung weiter auf 80 bis 90 °C erwärmt wird, wobei ein Trägergas durch die Suspension/Lösung zum Auffangen des entstehenden Rutheniumtetroxides geleitet wird und schließlich in einer dritten Stufe Bromat bei einem pH-Wert von 1 bis 3 zugegeben wird, wobei die entstehende Suspension/Lösung eine Temperatur von 60 bis 95 °C aufweist, und zum Auffangen von weiterem Rutheniumtetroxid ein Trägergas durch die Suspension/Lösung geleitet wird.

2. Verfahren nach Anspruch 1, **dadurch gekennzeichnet, dass** das Rutheniumtetroxid in einer Absorptionslösung aufgefangen wird.

3. Verfahren nach einem der Ansprüche 1 bis 2, **dadurch gekennzeichnet, dass** in der zweiten Stufe eine äquimolare Menge Chlorat zur Lösung gegeben wird.

4. Verfahren nach einem der Ansprüche 1 bis 3, **dadurch gekennzeichnet, dass** als Absorptionslösung Salzsäure verwendet wird.

5. Verfahren nach einem der Ansprüche 1 bis 4, **dadurch gekennzeichnet, dass** Chlorat in Form einer Natriumchloratlösung zur Lösung gegeben wird.

6. Verfahren nach dem Anspruch 5, **dadurch gekennzeichnet, dass** die Natriumchloratlösung 4,5 molar ist.

7. Verfahren nach einem der Ansprüche 1 bis 6, **dadurch gekennzeichnet, dass** Bromat in Form einer Natriumbromatlösung zur Lösung gegeben wird.

8. Verfahren nach Anspruch 7, **dadurch gekennzeichnet, dass** die Natriumbromatlösung 1,5 - 2 molar ist.

9. Verfahren nach einem der Ansprüche 1 bis 8, **dadurch gekennzeichnet, dass** die Lösung in der ersten Stufe auf T = 65 °C erwärmt wird.

10. Verfahren nach einem der Ansprüche 1 bis 9, **dadurch gekennzeichnet, dass** die Lösung in der ersten Stufe frei von organischen Verbindungen ist.

11. Verfahren nach einem der Ansprüche 1 bis 10, **dadurch gekennzeichnet, dass** die Zugabegeschwindigkeit der Chloratlösung dem Reaktionsfortschritt angepasst wird.

12. Verfahren nach einem der Ansprüche 1 bis 11, **dadurch gekennzeichnet, dass** nach der Bromatzugabe und dem Abreagieren eine H⁺-Konzentration von c > 1 mol/l eingestellt wird.

13. Verfahren nach Anspruch 12, **dadurch gekennzeichnet, dass** nach der Einstellung Chlorgas in die Lösung eingeleitet wird.

14. Verfahren nach Anspruch 13, **dadurch gekennzeichnet, dass** bei der Einleitung von Chlor gleichzeitig Pressluft verwendet wird.

## Claims

1. Process for separating ruthenium from noble metal solutions by heating the ruthenium-containing noble metal solution which contains H⁺ and Cl⁻ ions and then adding chlorate and further heating the suspension/solution formed to 80 to 90°C and collecting the ruthenium tetroxide formed, **characterized in that**, in a first stage, the ruthenium-containing noble metal solution having an H⁺ concentration and Cl⁻ concentration of, in each case, > 1 mol/l is heated to 50 to 65°C, then, in a second stage, the chlorate is added and the suspension/solution formed and having a temperature of 50 to 65°C is further heated to 80 to 90°C, a carrier gas being passed through the suspension/solution for collecting the ruthenium tetroxide formed, and finally, in a third stage, bromate being added at a pH of 1 to 3, the suspension/solution formed having a temperature of 60 to 95°C, and a carrier gas is passed through the suspension/solution to collect further ruthenium tetroxide.

2. Process according to Claim 1, **characterized in that** the ruthenium tetroxide is collected in an absorption solution.

3. Process according to either of Claims 1 and 2, **characterized in that**, in the second stage, an equimolar amount of chlorate is added to the solution.

4. Process according to any of Claims 1 to 3, **characterized in that** the absorption solution used is hydrochloric acid.

5. Process according to any of Claims 1 to 4, **characterized in that** chlorate is added in the form of a sodium chlorate solution to the solution.

6. Process according to Claim 5, **characterized in that** the sodium chlorate solution is 4.5 molar.

7. Process according to any of Claims 1 to 6, **characterized in that** bromate is added in the form of a sodium bromate solution to the solution.

8. Process according to Claim 7, **characterized in that** the sodium bromate solution is 1.5 - 2 molar.

9. Process according to any of Claims 1 to 8, **characterized in that** the solution is heated in the first stage to T = 65°C.

10. Process according to any of Claims 1 to 9, **characterized in that** the solution in the first stage is free of organic compounds.

11. Process according to any of Claims 1 to 10, **characterized in that** the rate of addition of the chlorate solution is adapted to the progress of the reaction.

12. Process according to any of Claims 1 to 11, **characterized in that** the H⁺ concentration is adjusted to c > 1 mol/1 after the bromate addition and the reaction.

13. Process according to Claim 12, **characterized in that** chlorine gas is passed into the solution after the adjustment.

14. Process according to Claim 13, **characterized in that** compressed air is used simultaneously with the introduction of chlorine.

## Revendications

1. Procédé pour séparer le ruthénium de solutions de métaux nobles par chauffage de la solution de métaux nobles contenant du ruthénium qui contient des ions H⁺ et Cl⁻ puis addition de chlorate et chauffage supplémentaire à 80 à 90°C de la suspension/solution résultante et piégeage du tétroxyde de ruthénium formé, **caractérisé en ce que**, dans une première étape, la solution de métaux nobles contenant du ruthénium qui présente une concentration de H⁺ et une concentration de Cl⁻ > 1 mol/l chacune est chauffée à 50 à 65°C puis, dans une deuxième étape, le chlorate est ajouté et la suspension/solution résultante, qui présente une température de 50 à 65°C, est chauffée encore à 80 à 90°C, un gaz vecteur étant introduit dans la suspension/solution pour piéger le tétroxyde de ruthénium formé, et enfin, dans une troisième étape, du bromate est ajouté à un pH de 1 à 3, la suspension/solution résultante présentant une température de 60 à 95°C, et un gaz vecteur est introduit dans la suspension/solution pour le piégeage de tétroxyde de ruthénium supplémentaire.

2. Procédé selon la revendication 1, **caractérisé en ce que** le tétroxyde de ruthénium est piégé dans une solution d'absorption.

3. Procédé selon l'une des revendications 1 à 2, **caractérisé en ce qu'**une quantité équimolaire de chlorate est ajoutée à la solution dans la deuxième étape.

4. Procédé selon l'une des revendications 1 à 3, **caractérisé en ce que** l'acide chlorhydrique est utilisé comme solution d'absorption.

5. Procédé selon l'une des revendications 1 à 4, **caractérisé en ce que** le chlorate est ajouté à la solution sous forme d'une solution de chlorate de sodium.

6. Procédé selon la revendication 5, **caractérisé en ce que** la solution de chlorate de sodium est 4,5 fois molaire.

7. Procédé selon l'une des revendications 1 à 6, **caractérisé en ce que** le bromate est ajouté à la solution sous forme d'une solution de bromate de sodium.

8. Procédé selon la revendication 7, **caractérisé en ce que** la solution de bromate de sodium est 1,5-2 fois molaire.

9. Procédé selon l'une des revendications 1 à 8, **caractérisé en ce que** la solution est chauffée à T = 65°C dans la première étape.

10. Procédé selon l'une des revendications 1 à 9, **caractérisé en ce que** la solution est dépourvue de composés organiques dans la première étape.

11. Procédé selon l'une des revendications 1 à 10, **caractérisé en ce que** la vitesse d'addition de la solution de chlorate est adaptée à l'avancement de la réaction.

12. Procédé selon l'une des revendications 1 à 11, **caractérisé en ce qu'**une concentration de H⁺ de c > 1 mol/l est établie après l'addition de bromate et la réaction.

13. Procédé selon la revendication 12, **caractérisé en ce que** du gaz chlore est introduit dans la solution après l'établissement.

14. Procédé selon la revendication 13, **caractérisé en ce que** de l'air comprimé est utilisé lors de l'introduction du chlore.
